# EUROPEAN PATENT APPLICATION

(11) **EP 3 351 361 A1**
(43) Date of publication of application: **25.07.2018**
(21) Application number: 17152099.2
(22) Date of filing: 19.01.2017
(51) Int. Cl.: B26D 3/08, B29C 59/00

(54) **APPARATUS FOR SCORING A LAYER ADHESIVELY PLACED ON A SUBSTRATE AND METHOD OF SEPARATING SUCH A LAYER**

(71) Applicant: 3M Innovative Properties Company, Saint Paul, MN 55133-3427 (US)
(72) Inventor: Rudek, David, 40470 Düsseldorf (DE); Keller, Thomas, 41469 Neuss (DE); Zimmer, Christoph, 41352 Korschenbroich (DE); Coblitz, Burkhart, 41372 Niederkrüchten (DE)
(74) Representative: Bergen, Katja

(57) **Abstract**

The present invention provides an apparatus for scoring a layer, in particular a layer of an adhesive film, foil, or sheet, adhesively placed on a substrate. The apparatus comprises a structural body, a blade movably received in the structural body, a spring element configured for loading the blade with a predetermined scoring force and a slide shoe arranged at a distal end of the structural body. The slide shoe comprises an opening for the blade to extend through the opening for scoring a layer while sliding the apparatus over the layer. Furthermore, the slide shoe comprises, at least at one side, a plurality of protrusions for establishing a defined sliding contact. In addition, the invention provides a corresponding method of separating a layer.

## Description

### FIELD OF THE INVENTION

The present invention relates to an apparatus for scoring a layer, in particular a layer of an adhesive film, foil, or sheet, adhesively placed on a substrate. The present invention also relates to a method of separating such a layer.

### BACKGROUND OF THE INVENTION

Although applicable to any kind of layer adhesively attached to a substrate, the present invention and the problem on which it is based will be explained in greater detail with reference to adhesive paint foils or paint films or paint sheets for vehicle coloration and/or vehicle paint protection.

In order to avoid cost-intensive masking procedures, in particular for bi-tone colorations, the automotive industry uses colored film solutions, e.g. adhesively backed film solutions. For example, a colored adhesive film can be applied to the roof of a car in order to achieve a roof color different from the body color. An exemplary sheet adhesion device for adhering an adhesive sheet to a car body is described in WO 01/05902 A2.

One challenge during the application process of such paint foils or films or sheets is the precise cutting of the foils or film without remaining marks or visible deformations of the foils or film (so called shock lines). Those remaining marks or visible deformations (shock lines) may for example be the result of a tension in the adhesive layer of the film or the result of a stretch process in the adhesive layer that took place during the application process of the film. This tension or result of a stretch process usually stays in the film as a visible mark or deformation. If for example the film is applied onto a substrate by leaving the edge of the film in the air and cutting the film in the air, those above described shock lines may occur.

EP 2 910 350 A1 describes an adhesive film, a tool and a method for applying and cutting of an adhesive film onto a roof surface of a vehicle. According thereto, an adhesive film is applied on the roof surface of the motor vehicle, wherein the film extends beyond the surface. Areas of the film that extend beyond the surface are not adhered to the surface. A cutting tool guiding means is then placed on the surface of the car such that the engaging areas of the guiding tool are in an abutting position with corresponding opposed surfaces of the motor vehicle. A cutting slit provided in the guiding tool is positioned such that a cutting tool inserted into the slit is guided along the area of the film that is to be cut off. The unadhered section of the film that is to be cut off is then placed over the cutting slit of the guiding means and a cutting tool is inserted into the cutting slit such that the excess film is cut off by moving the cutting tool along the cutting slit. As described above, the risk that shock lines may occur exists with this known method.

### SUMMARY OF THE INVENTION

In view of the above, an object of the present invention is to provide a new and improved apparatus and method for separating or cutting a layer, in particular a layer of an adhesive film, foil, or sheet, adhesively placed on a substrate.

In accordance with the present invention, an apparatus for scoring a layer, in particular a layer of an adhesive film, foil, or sheet, adhesively placed on a substrate as recited in claim 1 and a method of separating a layer, in particular a layer of an adhesive film, foil, or sheet, adhesively placed on a substrate as recited in claim 12 are provided. Advantageous or preferred features of the invention are recited in the dependent claims.

According to the first aspect, therefore, the present invention provides an apparatus for scoring a layer, in particular a layer of an adhesive film, foil, or sheet, adhesively placed on a substrate. The apparatus comprises a structural body, a blade movably received in the structural body, a spring element configured for loading the blade with a predetermined scoring force and a slide shoe arranged at a distal end of the structural body. The slide shoe comprises an opening for the blade to extend through the opening for scoring a layer while sliding the apparatus over the layer. Furthermore, the slide shoe comprises, at least at one side, a plurality of protrusions for establishing a defined sliding contact.

In this way, the invention provides an apparatus which is configured for stable sliding on and thereby scoring the layer. Thus, the layer can be separated without any marks, neither on the substrate nor on the remaining part of the layer. The apparatus in particular can be used as a trimming tool with the ability to cut an already applied thin adhesive film, e.g. a car wrap film, or a paint protection film, directly on a substrate, e.g. a painted metal sheet. By means of the spring, the blade is force-controlled. The scoring force may be adjusted in a way to score the layer by leaving a clean cutting edge without harming the substrate surface. Thus, according to the invention, process steps of precise adhesive application of a layer on a substrate can be reduced. Furthermore, layer defects, which may appear with other separation/cutting methods, for example shock lines in case of a bridge cut (cutting the film in a bridging area with air between the applied film and the substrate) or jig cut (cutting the film on a jig, which is removed from the substrate and the film after cutting where again air is between the applied film and the substrate) are prevented.

In particular, the spring element may be dimensioned and/or adjusted such that the scoring force is strong enough to generate a scoring mark by at least partially penetrating a layer. The minimum depth of penetration is thereby configured such that a minimal needed depth for a reliable film removal resulting in a clean cutting edge with no fringes or cracks along the edge is provided. Furthermore, the spring element is dimensioned and/or adjusted such that a maximal utilizable depth for a reliable scoring without scratching the substrate's surface is not exceeded. A cutting depth tolerance is dimensioned accordingly between the minimum and maximum depth.

According to the invention the apparatus is designed for scoring a layer. The layer may be the entire film layer of an adhesive film without the adhesive layer. It may also be only one layer of the entire adhesive film comprising multiple layers and an adhesive layer. And it is also possible that the layer according to the invention includes all layers of the adhesive film with or with at least partially the adhesive layer.

In other words, an adhesive for adhesively placing the layer may be part of the layer or an additional adhesive film. In case of an additional adhesive between the layer and the substrate, the penetration may reach the adhesive but not necessarily has to reach the adhesive.

The protrusions of the apparatus for scoring a layer according to the invention allow stable sliding along the substrate, e.g. along a predetermined trajectory. They may guide the slide shoe of the apparatus along a guiding element and/or may provide a stable and continuous surface contact to the surface of the layer and/or substrate and/or guiding element, even on curved surfaces. The proposed solution therefore allows trim cutting the layer after it is applied on the substrate without leaving any substrate and/or layer defects, even if the surface of the substrate has a complex geometry.

A plurality of protrusions may be defined as more than one or at least two protrusions. The design and the number of protrusions needs to be defined such that the apparatus may be moved along the layer to be cut or the surface with a defined sliding contact.

The invention is based on the idea of scoring a layer, in particular a layer of an adhesive film instead of cutting the entire film. This means that the apparatus of the invention is designed such that the layer/film is not cut or penetrated completely. In particular, the invention differs from the so called kiss cut tools, which penetrate a layer or a film on a substrate completely. In contrast, according to the invention, a partial penetration of the layer is possible. This partial penetration may function as a defined breaking point for subsequent complete separation and removal of the excess of the layer/film resulting in a clean cutting/separation edge.

In addition the apparatus according to the invention allows cutting the layer, while the film has already been applied onto the substrate without additional air between the film, foil or sheet and the substrate. Scoring the film while it is applied onto the substrate prohibits any tension or stress being applied to the adhesive layer of the film, sheet or foil, which avoids the occurrence of shock lines.

Further advantages of the invention are in some embodiments the opportunity of an easy guidance by a jig or on a 3D waved or curved substrate or contact surface (like a ruler), in particular by means of the protrusions.

Another advantage of the invention is, that process steps and time may be reduced by means of the invention, because no additional means like an underlay pad for a jig cut or the like are necessary.

Furthermore, the apparatus according to the invention invention may also be used with an automated system for applying a film onto a substrate, e.g. in combination with an automated system for guiding the apparatus according to the invention.

Finally, in some embodiments, industry standard blades may be used for the apparatus according to the invention, which has an advantage in costs. In addition those blades are commercially available and usually easy to purchase.

In an advantageous embodiment, the blade may provide a round or rounded blade tip. This configuration may increase the process stability due to the increase of the tolerance range of the applied force. If the tip of the blade is rounded the surface may be more protected if it gets contacted by the blade. Accordingly, the scoring force is transferred gently onto the layer and a very regular and/or continuous penetration depth can be achieved.

In a further embodiment the blade may comprise a ceramic material. Due to the very high hardness of ceramic material, the blade keeps its sharpness for a very high number of scoring cycles. Furthermore, ceramic material is chemically stable. In this way, a very durable scoring tool is provided which needs no or only very low maintenance. Other possible materials for the blade may be metal, glass, polymeric materials such as for example PMMA or other suitable materials.

According to another embodiment, the apparatus according to the invention may provide a slide shoe comprising means for movably attaching the apparatus to the substrate. The means for movably attaching the apparatus to the substrate may for example be magnets. The slide shoe may comprise integrated magnets that are designed not to touch the surface of the material to be scored but to establish a magnetic link to the substrate. In an ideal scenario, the substrate comprises ferromagnetic features. If this is not the case, a ferromagnetic counterpart underneath the substrate may be used to fix the apparatus according to the invention to the substrate.

Using a tool that needs to be vertical to the surface and for a bended or corrugated surface always vertical to the tangent plane like a scoring tool according to the invention, may bare the risk of tilting the tool while moving due to the body tool being a lever arm that reacts on the forces applied to move the tool. This risk may for example be reduced when means for movably attaching the apparatus to the substrate, e.g. magnets are used, which will form a stabile foundation with a proper surface contact. Secondly magnets may allow for an easier way of guiding the tool along a guiding element as a ruler or a rail. Especially for non-flat surfaces this will reduce the risk of tilting or leaving the desired path along the guidance as a tool is fixed to two reference levels, which leaves only one variable axis for moving the tool relative to the substrate.

The magnets may be integrated into other parts of the tool structure without touching the surface and/or the guidance. They may also be designed as balls to combine the reduction of friction while moving and attaching the apparatus according to the invention to the substrate.

According to one embodiment, longitudinal magnets might be used, that could be cylindrical, rectangular or of any other shape. They may be integrated into the protrusions of the apparatus according to the invention, thereby not touching the layer to be scored. It is also possible that the elements have the shape of a ball or a roll, which is also implemented into the protrusions. They can either glide or role over the surface to be scored. They may also be coated with a material to prevent defects in the surface of the layer to be scored.

In a preferred embodiment, the apparatus may comprise a pre-loading element configured to pre-load the spring in order to adjust the scoring force. Thus, the penetration depth of a scoring operation can be adapted to properties of the layer and/or to the surface form of the substrate by adapting the pre-load of the blade in the apparatus accordingly. In particular, the pre-loading element may be configured adjustable for calibrating the scoring force. Preferably, the preloading element may be steplessly or continuously calibrateable, for example by means of a thread. In this way, the scoring force can be adjusted precisely.

According to an embodiment, the protrusions may be configured for establishing a defined sliding contact to the layer and/or the substrate and/or any means used for guiding the apparatus according to the invention. Alternatively or in addition, at least one protrusion may be configured for establishing a defined sliding contact to the substrate. In this way, the slide shoe is always in a defined contact with the layer and/or the substrate, even though their surface may be curved or bent.

In particular, at least three protrusions may be arranged on a bottom sliding surface of the slide shoe. Thus, the slide shoe always has a defined stand on the layer and/or on the substrate.

According to another embodiment, the protrusions may be configured for establishing a defined sliding contact to a guiding element. In particular the protrusions may be configured to establish the sliding contact to a lateral guidance. The guiding element or lateral guidance can be external and attached for the purpose of scoring only or it may be a part of the substrate. For example an integral roof arch of a vehicle roof forming the substrate may serve as a lateral guidance for the apparatus for scoring according to the invention. In this way, roof applications where the layer or film is cut close to the roof ditch (along the weld line which is connecting roof sheet with a roof arch), a so called "ditch to ditch" application, is easily feasible.

It is also possible that more than three or two protrusions are arrange on the bottom sliding surface or any other according surface of the apparatus according to the invention, like for example two protrusions on a bottom sliding surface and on protrusion on a lateral sliding surface or any other combination of arranging the protrusions.

In particular, at least one protrusion may be arranged on a lateral sliding surface of the slide shoe. In this way, a defined lateral guidance is possible, even if the guiding element or lateral guidance is curved.

In another embodiment, the sliding shoe may be provided with both, protrusions for establishing a defined sliding contact to the layer and/or substrate and protrusions configured for establishing a defined sliding contact to a guiding element.

According to an embodiment, the blade may be configured as a swivel blade for automatically adapting its orientation to any sliding direction, wherein the swivel blade is designed such that it stays in a cutting position relative to the sliding direction. It may also be configured as a drag knife, which is defined as a blade where the cutting area is place eccentric to the blade center axis. Therefore, the blade is preferably freely rotatable along at least one axis. For example, the structural body of the apparatus according to the invention may be configured as a round sleeve and the blade may be received in a cylindrical holder within the sleeve, wherein low friction is provided between the sleeve and the holder. Accordingly, the blade always automatically orients in sliding direction because this forms the position with the lowest frictional resistance of the blade scoring the layer.

According to an embodiment, the apparatus may further comprise a ball element and a piston element, both arranged between the spring element and the blade to provide a point contact transferring the scoring force. In this way, the scoring force is transferred at low friction and the swivel blade may still easily adapt its orientation. Alternatively or in addition to a ball element, a ball shaped section may be provided. For example, the piston element may comprise a ball section in order to further reduce the point contact area ideally to a point.

According to a second aspect, the invention provides a method of separating a layer, in particular a layer of an adhesive film, foil, or sheet, adhesively placed on a substrate, comprising the steps of: scoring the layer by sliding an apparatus according to the invention over it to generate a score mark along a desired separation line; and removing the layer on one side of the score mark.

As discussed above, the invention is configured for scoring the layer without scratching the substrate. Afterwards, the excess of the layer can be removed and a clean edge is produced due to the scoring of the apparatus according to the invention.. Thus, the layer can be separated without any marks, neither on the substrate nor on the remaining part of the layer.

Since the invention is based on the idea of scoring a layer of a film or foil or sheet, the layer (including an adhesive) or the layer and adhesive is not penetrated completely but a defined breaking point is generated by scoring. In particular, a partial penetration of the layer is provided.

Advantageously, the layer does not have to be bent during the application and trimming. Accordingly, the invention allows application of an adhesively attached layer even on a complex surface, e.g. a car body roof, not only with high precision and no scratches on the substrate, but also without any defects in any of the layers of the applied film or foil (that may for example result from bending the film or foil).

In an embodiment, the method may further comprise a step of calibrating a pre-load of the spring element of the apparatus according to the invention to apply a scoring force calibrated to at least partially score the layer and remain the substrate unscratched. In this way, providing a necessary minimum penetration depth but not exceeding a maximum penetration depth can be ensured for various kinds of layers and/or various surface forms.

In an embodiment, calibrating a pre-load of the spring element may comprise: placing the apparatus on a jig provided with an opening for the blade; measuring a scoring force, and adjusting the pre-loading element to generate a pre-load of the spring corresponding to a desired scoring force. In particular, the scoring force is measured with a scale arranged directly at the opening of the jig. In this way, the scoring force can be calibrated numerically and reproducibly/repeatable.

In an embodiment, calibrating a pre-load of the spring element may further comprise: applying a sample layer onto a sample substrate; scoring the sample layer applied onto the sample substrate to generate a sample score mark; removing the sample layer from the sample substrate, at least in the area of a representative sample scoring; and inspecting the sample substrate for marks and/or scratches. If necessary, the pre-loading element may then be readjusted, in particular in case any marks and/or scratches or other insufficient scorings are identified. In this way, the calibration is possible with a sample only. Accordingly, the calibration does not result in an increased rejection rate of a production.

### BRIEF DESCRIPTION OF THE DRAWINGS

For a more complete understanding of the invention and the advantages thereof, exemplary embodiments of the invention are explained in more detail in the following description with reference to the accompanying drawing figures, in which like reference characters designate like parts and in which:
- Fig. 1: is a schematic sectional view of an apparatus for scoring a layer adhesively placed on a substrate;
- Fig. 2: is a sectional view of a blade of an apparatus according to Fig. 1 while scoring;
- Fig. 3A: is a schematic sectional view of an apparatus for scoring a layer according to a further embodiment;
- Fig. 3B: shows the apparatus of Fig. 3A in a pre-loaded state;
- Fig. 4A: is a detailed sectional view of a blade while scoring according to another embodiment;
- Fig. 4B: is a detailed sectional view of another embodiment of a blade;
- Fig. 5: is a schematic side view of an apparatus for scoring a layer without protrusions according to the prior art;
- Fig. 6: is a schematic side view of an apparatus for scoring a layer with protrusions on a lateral sliding surface;
- Fig. 7: is a schematic side view of an apparatus for scoring a layer with protrusions on a bottom sliding surface;
- Fig. 8: is a detailed side view of a slide shoe;
- Fig. 9: is a detailed bottom view of the slide shoe according to Fig. 8;
- Fig. 10: is a schematic side view of an apparatus for scoring a layer with protrusions on a bottom sliding surface according to another embodiment;
- Fig. 11: is a detailed perspective view of a slide shoe according to another embodiment;
- Fig. 12: is a detailed side view of the slide shoe according to Fig. 11;
- Fig. 13: is a detailed bottom view of the slide shoe according to Figs. 11 and 12;
- Fig. 14: is a schematic side view of a slide shoe of an apparatus for scoring on a strongly curved surface demonstrating the context of protrusions geometry and substrate's surface topography;
- Fig. 15: is a schematic side view of an apparatus for scoring on a strongly curved surface according to another embodiment;
- Fig. 16A: is a three dimensional drawing of another embodiment of a slide shoe according to the invention;
- Fig. 16B: is a side view of the slide shoe according to Fig. 16A; and
- Fig. 17A-D: is a schematic illustration of steps of a method for calibrating a preload of a spring element of an apparatus for scoring.

The accompanying drawings are included to provide a further understanding of the present invention and are incorporated in and constitute a part of this specification. The drawings illustrate particular embodiments of the invention and together with the description serve to explain the principles of the invention. Other embodiments of the invention and many of the attendant advantages of the invention will be readily appreciated as they become better understood with reference to the following detailed description.

It will be appreciated that common and/or well understood elements that may be useful or necessary in a commercially feasible embodiment are not necessarily depicted in order to facilitate a more abstracted view of the embodiments. The elements of the drawings are not necessarily illustrated to scale relative to each other. It will further be appreciated that certain actions and/or steps in an embodiment of a method may be described or depicted in a particular order of occurrences while those skilled in the art will understand that such specificity with respect to sequence is not actually required. It will also be understood that the terms and expressions used in the present specification have the ordinary meaning as is accorded to such terms and expressions with respect to their corresponding respective areas of inquiry and study, except where specific meanings have otherwise been set forth herein.

### DETAILED DESCRIPTION OF EMBODIMENTS

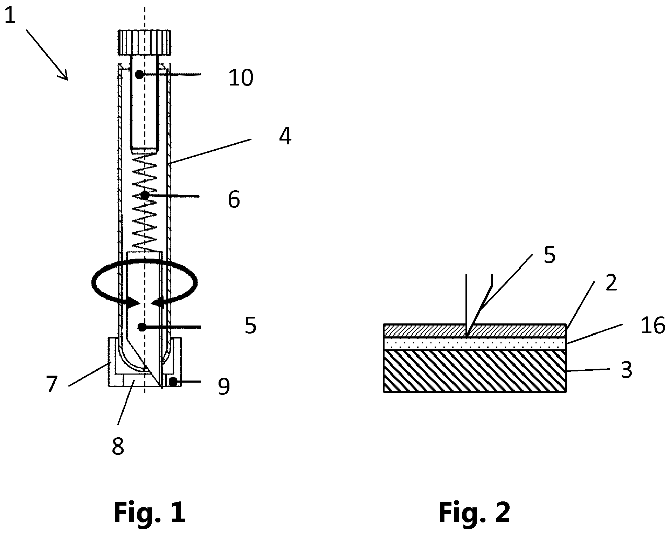

With reference firstly to Fig. 1 of the drawings, an apparatus 1 for scoring a layer adhesively placed on a substrate is illustrated schematically.

The apparatus 1 includes a structural body 4 which is formed as a sleeve. A blade 5 is received in the structural body 4 axially and rotationally movable. Furthermore, a spring element 6 is provided inside the structural body4 for loading the blade 5 with a scoring force. A pre-loading element 10 configured as an adjustment screw is provided to pre-load the spring 6 in order to adjust the scoring force.

A slide shoe 7 is arranged at a distal end of the structural body 4 opposite to the pre-loading element 10. In this embodiment, the slide shoe 7 is formed as a cap covering the bottom end of the structural body 4 and comprising an opening 8 for the blade 5 to extend through the opening 8 in use. With the blade 5 extending through the opening 8 and loaded by the spring element 6 with a scoring force, a layer 2 can be scored while sliding the apparatus over it, as illustrated for example in Fig. 2. With the apparatus according to the invention it is possible to score a layer of a film applied to a substrate in a defined manner without touching the substrate.

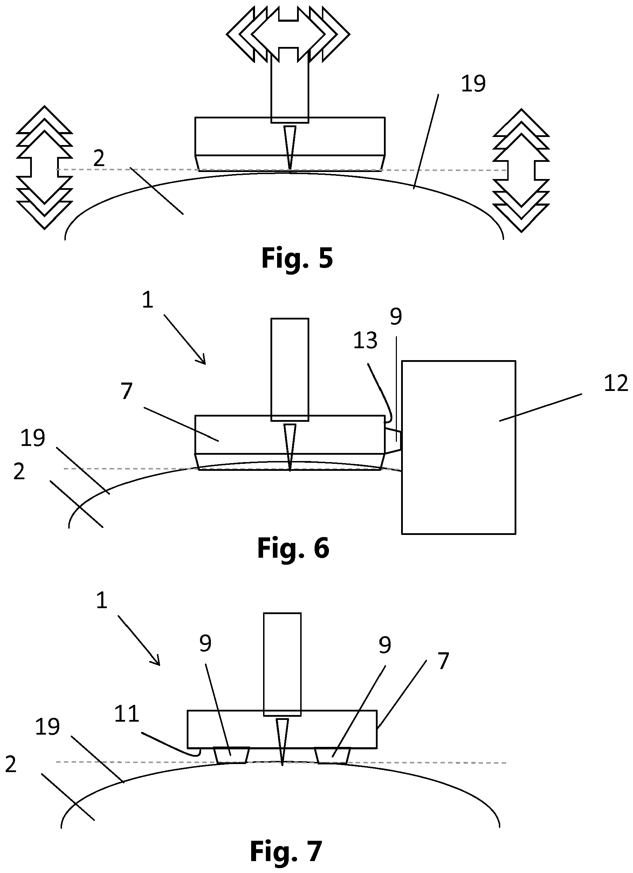

The slide shoe 7 at least at one side thereof has a plurality of protrusions 9. A plurality of protrusions may be two or more protrusions. The protrusions are configured to establish a defined sliding contact while scoring. The protrusions may be formed in different ways and at different positions of the slide shoe 7, e. g. as described in more detail below with regard to Figures 6 to 15.

Accordingly, the apparatus 1 is based on a force-controlled blade adjustment and defined sliding contact.

The blade 5 is preferably configured as a rotating blade, also called swivel blade or drag knife. It is placed inside the hollow cavity of the structural body 4. In a pre-loaded situation, meaning in use of the apparatus 1, the blade 5 is in contact with the spring element 6 and the spring element 6 is in contact with the pre-loading element 10.

In an embodiment, the swivel blade preferably can be rotated 360° around its axis, as indicated by the round arrows in Fig. 1. Thus, the blade 5 will automatically follow the scoring direction during the scoring process, even in the case of waved or round scoring shapes. This rotation is especially advantageous, if the blade can swivel with very few friction within the apparatus. This means that due to the shape of the blade, the cutting or scoring side of the blade will always face the layer to be scored. However, the invention is not limited to a 360° rotatable blade.

Additionally, the scoring force can be adapted at all times by means of an adjustable pre-loading element 10, in particular configured as adjustment screw. However, the setting of the pre-load will stay constant if no adjustment is made. Usually, no further settings are needed in use once the scoring force is calibrated, as long as similar layers and similar surface forms of a substrate are scored.

With reference now also to Fig. 2 of the drawings, a sectional view of a blade 5 of an apparatus according to Fig. 1 is illustrated while scoring.

A layer 2, for example a color or paint protection film layer, is adhesively placed on a substrate 3, for example a vehicle roof, by means of an adhesive layer 16. The adhesive layer 16 may be formed integrally with the layer 2, e. g. as an adhesive film, or may be an extra/additional adhesive layer placed separately on the substrate.

For scoring the layer 2, the blade 5 at least partially penetrates the layer 2, but does not touch the substrate 3. Accordingly, the pre-load for the spring 6 is provided such as to generate a suitable scoring force that will score layer 2 at least partially and does not touch the substrate..

Preferably, the scoring force is not too high such that the blade 5 does not fully penetrate the layer 2, but high enough to provide a defined breaking point by means of the scoring mark for creating a clean separating edge when removing the layer 2 on one side of the scoring mark. However, within an admissible tolerance of the penetration depth, the blade 5 may also slightly or locally penetrate through the layer 2 but not through the adhesive layer 16.

A working zone of a suitable scoring force depends in particular on the type of blade and the film or foil to be scored. For example, a force suitable for a sharp/acute metal swivel blade may range between of 0.5 to 0.8 N (0.3 N working zone).

For example, the layer 2 may be configured as an adhesive color or paint protection film for automotive applications. Very much like the current car paint solutions, such films need to endure at least 10 years of exposure to the elements without significant visual degradation.

One aspect of achieving especially the requirements for color films is to use extremely pliable, thin polymeric films equipped with high tack adhesives. For example, such films are manufactured by 3M and known in the art under the name "Body Color Film" (BCF) or "Car Wrap Film".

Such a BCF typically comprises a polymeric film bearing at least one adhesive layer. Thus, the layer 2 and adhesive layer 3 are integral in this case.

In an embodiment, the adhesive layer 16 can comprise a pressure-sensitive adhesive. A pressure-sensitive adhesive is tacky at room temperature and can be applied to a surface (of the substrate) to provide an adhesive bond without requiring heat. Manual pressure may be sufficient to create a bond. The adhesive film is usually covered by a release liner so that the adhesive film can be wound into a roll.

In another embodiment, adhesive layer can also comprise a hot-melt adhesive that becomes tacky only upon heating. In such case the adhesive film can be wound into roll without a release layer but a release liner may still be used. The release liner is removed prior to the application of the film.

The polymeric film typically is appropriately colored so that the adhesive film can provide the desired color effects. However, it is also possible to provide a printable film, which allows a maximum degree of individualization by means of printing any desired design on it.

The film, in addition, may also have a high-gloss finish so it provides the impression of a continuous glass surface. The film may also have anti-reflective, heat-deflective or heat-absorbing properties.

A polymeric film may be, for example, a PU film, meaning it contains PU as the major component, for example at least 50% by weight of the polymeric film of PU. Other polymeric films are for example PVC films, meaning they contain PVC as the major component, for example at least 50% by weight of the polymeric film of PVC.

The adhesive layer of such a film for example contains an acrylate resin adhesive. The film may have a total thickness of from about 50 to 5,000 mm.

Such films are available from 3M Company, for example under the trade designations SCOTCHCAL (PVC) or ENVISION (non-PVC).

The substrate, for example, may be a paint coated metal sheet, such as of a vehicle roof or other vehicle body part.

In order to achieve a quick comparison between scoring and kiss cutting of such a layer adhesively placed on the substrate, the film may be scored by sliding the apparatus on a test sample comprising a substrate partially covered with a film adhesively placed thereon. The apparatus 1 may also be slid beyond the film directly on the substrate to generate a reference kiss cut. In this way, a kiss cutting area and a scoring area are generated. If a visual inspection after the scoring shows a clean separation edge after partial removal of the film on one side of the scoring mark and no visible damage to the substrate in the scoring area after complete removal of the film (while reference kiss cuts are obviously visible), the scoring is working in the intended way.

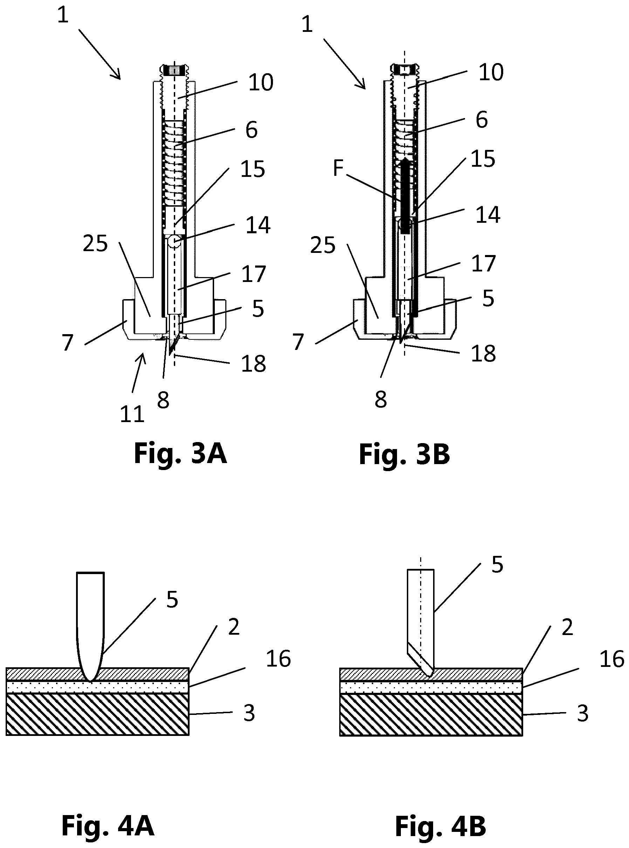

Fig. 3A shows a schematic sectional view of an apparatus for scoring a layer according to a further embodiment.

This embodiment differs from the embodiment of Fig. 1 in that the body 4 comprises a flange 25 on its bottom end. Accordingly, the slide shoe 7 is configured with a bigger diameter and a larger bottom sliding surface 11.

The slide shoe 7 is a part configured to be mounted to the structural body 4. Here, the slide shoe 7 is formed as a cap to be put on the bottom end of the body 4 of apparatus 1. In particular, the slide shoe 7 is precisely mounted to the structural body 4 to prevent deviations in height which could lead to scoring mistakes. Structural details of the sliding shoe, in particular the form and position of protrusions, are not shown here for a better overview and are described in detail below with regard to Figures 6 to 15.

The body 4 with its flange 25 comprises a hollow core with a constant inner diameter. In particular, the inner circumferential surface of the body 4 with its flange 25 works as a low friction guiding surface for the spring element 6 configured as a compression spring.

In addition, the blade 5 is received in a cylindrical holder 17, which may be formed for example of a polymer material. Furthermore, a ball element 14 is received in the holder on the opposite side contacting a piston element 15 functioning as a spacer between the spring element 6 and the ball element 14.

Fig. 3B shows the apparatus of Fig. 3A in a pre-loaded state.

Once assembled, the spring element 6 is in a pre-loaded state. Accordingly, the scoring force F is guided through the piston element 15 and transferred to the blade 5 via the ball element 14.

By contact between the ball element 14 and the piston element 15, a point contact transferring the scoring force F from the spring element 6 to the blade 5 is provided. Accordingly, the contact surface area and therefore also rotational friction are reduced for easy blade rotation. In particular, the point contact is positioned on the rotational axis 18 of the swivel blade 5 (see Fig. 3A), such that the swivel blade 5 may rotate at lowest friction even though it is loaded by the scoring force F. In order to compensate for the changes in force caused by the movements of the blade axial direction, the spring is designed in a way that it keeps pressure force changes as low as possible during a change of spring travel. This can be done by selecting the appropriate springs with the appropriate spring characteristic as well known by a person skilled in the art. For example the spring may have a linear spring characteristic, which gives the force evenly with the increase of deflection. A spring with a declining spring characteristic may also be used, which reduces the force as the deflection of the spring increases.

As already explained with regard to Fig. 1, a pre-load of the spring element 6 can be adjusted according the needed penetration depth by the use of the pre-loading element 10 configured as an adjustment screw.

Fig. 4A shows is a detailed sectional view of a blade 5 while scoring according to another embodiment.

This embodiment differs from the embodiment according to Fig. 2 in that the blade 5 is configured as blade with a round shape. The blade may be a ceramic blade or may comprise any other kind of materials. For such a type of blade, a necessary scoring force may range at a higher value and larger range compared to the blade as of the embodiment according to Fig. 2. For example, a suitable scoring force may range between 2.1 to 3.3 N (1.2 N working zone). These differences in value and range are based on the rounded blade point and the different material.

However, ceramic blades, in particular due to their hardness and chemical resistivity, may have advantages in terms of reliability and process stability for a scoring tool such as the apparatus 1. For example, in comparison to steel blades ceramic blades stay sharp up to 10x longer, do not rust, are chemically inert and do not need any oil coatings.

Fig. 4B shows is a detailed sectional view of a blade 5 while scoring according to another embodiment.

This embodiment differs from the embodiment according to Fig. 4A in that the blade is configured as to provide a blade with a round or rounded tip. The blade is still configured to be a swivel blade as the one shown in Fig. 2.

Fig. 5 shows a schematic side view of an apparatus 1 for scoring a layer according to the invention without protrusions.

In this example, the surface 19 of the substrate (and the layer 2 thereon) is curved. Due to the curvature of the surface 19, the slide shoe 7 with no protrusions does not have a stable stand. Accordingly, it is difficult to keep the apparatus in a constant position. This, in turn, may lead to an undesired discontinuity of the scoring mark.

Fig. 6 shows a schematic side view of an apparatus for scoring a layer with protrusions on a lateral sliding surface.

The surface 19 of the substrate 2 is curved similar to Fig. 5.

According to this embodiment, the slide shoe 7 is stabilized by means of the guiding element 12 configured as a lateral guide and in that a plurality of at least two protrusions 9 is provided on a lateral sliding surface 13 facing the guiding element 12. In this way, the slide shoe 7 can abut on the guiding element 12 while sliding and the scoring mark produced will be straight and in the desired position. The slide shoe 7 provides a plurality of protrusions, some of them being directed to the guiding element and some of them being directed to the surface.

The guiding element 12 may be configured as a lateral guidance, which be external and attached for the purpose of scoring only or may be an integral part of the substrate 2. For example an integral roof arch of a vehicle roof forming the substrate 2 may serve as a lateral guidance for the apparatus 1. In this way, roof applications where a film is cut close to the roof ditch (along the weld line which is connecting roof sheet with a roof arch), a so called "ditch to ditch" application, is easily feasible.

Fig. 7 shows a schematic side view of an apparatus 1 for scoring a layer with protrusions 9 on a bottom sliding surface 11.

The surface 19 of the substrate 2 is curved similar to Fig. 5.

According to this embodiment, the slide shoe 7 is stabilized by means of a plurality of at least three protrusions 9 provided on the bottom sliding surface 11. The protrusions 9 compensate the curvature of the surface 19. In this way, the slide shoe 7 remains in a stable stand while sliding. Thus, the scoring mark produced will also be straight and in the desired position.

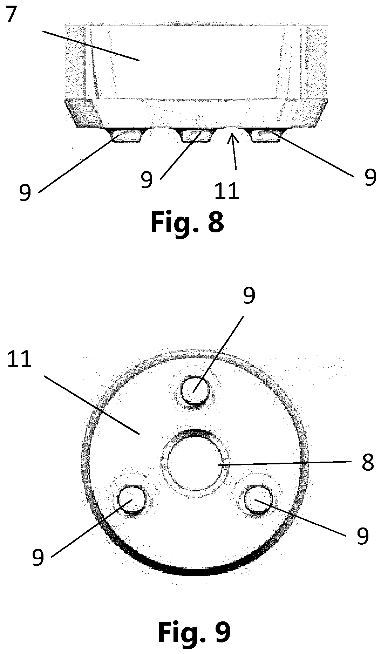

Fig. 8 shows a detailed side view of a slide shoe 7. Fig. 9 shows a detailed bottom view of the slide shoe 7 according to Fig. 8.

The slide shoe 7 comprises a hollow cylindrical form closed on one axial end. The closed axial end of the slide shoe 7 forms the bottom sliding surface 11. The bottom sliding surface 11 comprises a round central opening 8 and three protrusions 9 evenly distributed concentrically around the central opening 8. The slide shoe is adapted to be mounted on a sleeve 4 of an apparatus 1 according to the invention or on a flange 25 of a sleeve 4 of an apparatus 1 according to the invention.

The bottom sliding/gliding surface 11 of the sliding shoe 7 is generally planar and provided with the protrusions 9, here three protrusions configured as a three-point support for a safe and stable use on curved substrates to prevent tilting or rocking. Thus, it is configured to perform an easy and stick-n slip free movement while the apparatus is sliding/gliding on the layer to be scored, e.g. on a layer of an applied film, e.g. BCF layer, even if the surface is curved.

The invention, however, is not limited to a planar bottom sliding surface 11. In other embodiments, the bottom sliding surface 11 may e.g. be curved or provide any other shape according the form of the substrate.

Furthermore, the protrusions according to this embodiment are formed integral with the slide shoe 7 and comprise a cylindrical shape. However, in other embodiments, protrusions may have a different shape and/or may be formed as separate parts fixed to the slide shoe 7.

In addition, the invention is not limited to three protrusions 9. In other embodiments, the bottom sliding surface 11 may comprise e.g. 2, 4, 5, 6 or more protrusions 9.

Since the slide shoe 7 of this embodiment is formed as a circular cylinder, it can easily be aligned along any guide or path, in particular in combination with a self-orientating or swivel blade 5 of the apparatus 1. However, the invention is not limited to a circular cylindrical form of the sliding shoe 7. In other embodiments, the sliding shoe may have any other suitable form, e. g. adapted to a form of the substrate and /or adapted to a form of a guiding element. The slide shoe 7 may also comprise one bottom sliding surface 11 and one lateral sliding surface 13.

The protrusions 9 may also comprise magnetic elements (not shown in the drawings of this figure), which help to reliably guide the apparatus according to the invention over the surface of the layer to be scored by creating a magnetic link between the scoring apparatus and the substrate. If the substrate itself does not provide any ferromagnetic features an additional magnetic counterpart may be used underneath the substrate.

The magnetic elements may also be integrated into any of the other protrusions of the other embodiments described in this section of the patent application.

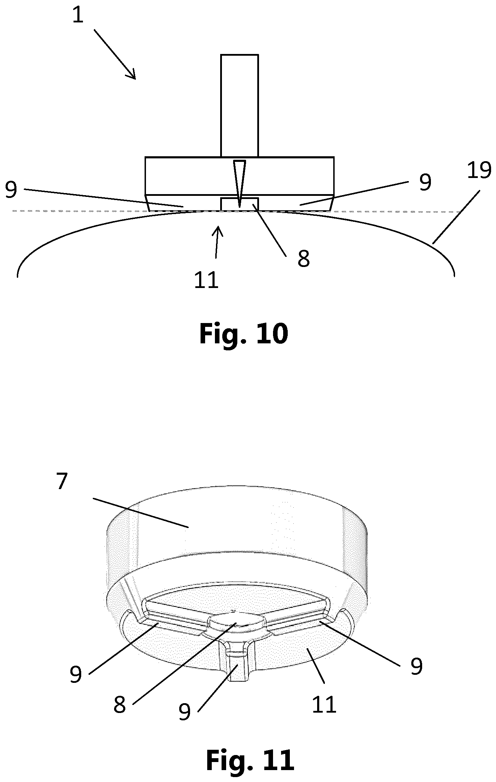

Fig. 10 shows a schematic side view of an apparatus 1 for scoring a layer with protrusions 9 on a bottom sliding surface 11 according to another embodiment.

According to this embodiment, the protrusions 9 are formed as ribs. The ribs extend from the opening 8 towards a lateral surface of the slide shoe 7.

In this way, the ribs provide a line contact surface for a very stable stand when sliding on a flat surface, as depicted in Fig. 10 with a dashed line. In case of convex contours of the surface 19, as shown with a solid line in Fig. 10, a short line or point contact is provided at an inner radius of each rib directly next to the opening 8. In this way, a distance between the bottom sliding surface 11 and a contacting point of the blade 5 and the surface 19 and are kept substantially constant compared to a flat surface, resulting in an substantially equal pre-load of the spring element 6. In this way, for example a transition from a flat surface to a convex surface can be slid over without a substantial change of the scoring force and penetration depth.

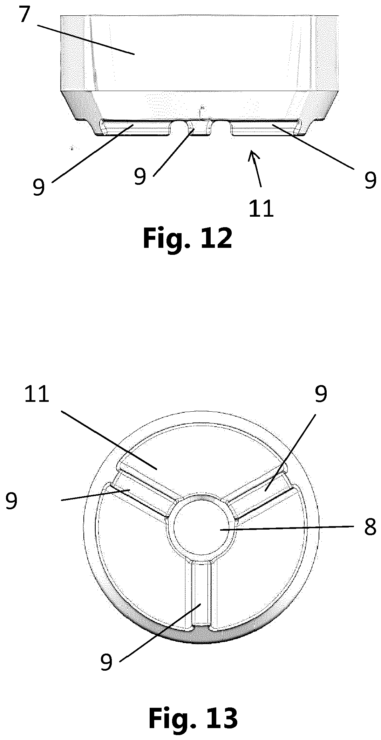

Fig. 11 shows a detailed perspective view of a slide shoe with protrusions on a bottom sliding surface according to another embodiment, Fig. 12 shows a detailed side view of the slide shoe according to Fig. 11, and Fig. 13 shows a detailed bottom view of the slide shoe according to Figs. 11 and 12.

According to this embodiment, three protrusions 9 on the bottom sliding surface 11 of a cylindrically formed slide shoe 7 are formed as three ribs extending radially from a central round opening 8. The ribs are evenly distributed over the bottom sliding surface 11 in a spoke like manner. In this way, three line contacts are provided for sliding on an even surface and three point contacts next to the opening are provided when sliding on a convex surface.

The number of ribs is only exemplary. In other embodiments, more than three, in particular 4, 5, 6 or more ribs, especially arranged in a spoke like manner, may be provided.

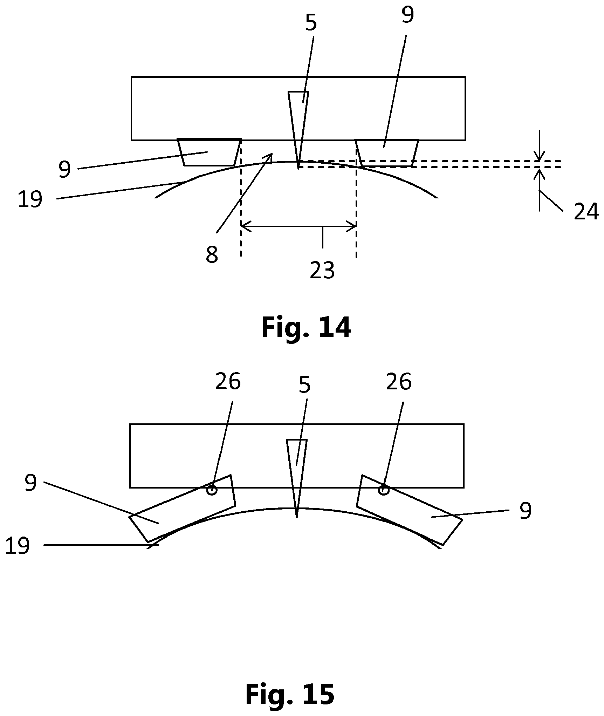

Fig. 14 shows a schematic side view of an apparatus 1 for scoring on a strongly curved surface 19.

According to this embodiment, the slide shoe 7 comprises a plurality of small protrusions 9 positioned near, in particular directly next to, the opening 8. The small protrusions 9 may have any suitable shape. For example only, the small protrusions 9 have a truncated cone shape in Fig. 9.

The width 23 of the opening 8 and the curvature of the surface 19 lead to a difference 24 of the position of a contacting point between the blade 5 and the surface 19 compared to a flat surface. The position of the protrusions 9 directly next to the opening minimizes this difference 24. Accordingly, this arrangement of the protrusions 9 allows scoring on strongly curved surfaces.

Fig. 15 shows a schematic side view of an apparatus 1 for scoring on a strongly curved surface 19 according to another embodiment.

This embodiment provides protrusions 9 with a pivot 26. In this way, the protrusions can adjust the distance between the bottom sliding surface 11 and the contact point between the blade 5 and the surface 19 by rotating the protrusions 9. Accordingly, a difference 24 of the position of a contacting point between the blade 5 and the curved surface 19 compared to a flat surface can be compensated.

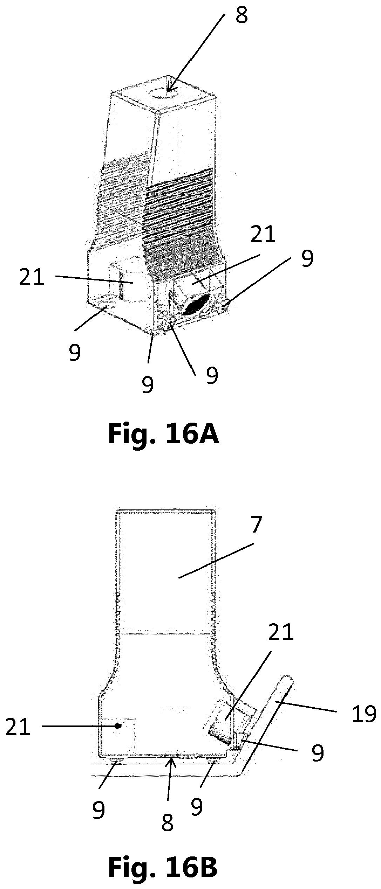

In Fig. 16A a three dimensional drawing of another embodiment of a slide shoe 7 according to the invention is shown.

In this embodiment the slide shoe 7 has a rectangular shape with two grip sections. It further provides a bottom sliding surface with four protrusions 9 (only two of them can be seen in Fig. 16A) as well as a lateral sliding surface with two protrusions 9. The slide shoe 7 further comprises an opening 8 for receiving a blade (also not shown in this drawing). The slide shoe 7 of Fig. 16 A differs from the slide shoes described before in that it provides two magnet elements 27. One magnet element 27is positioned towards the bottom sliding surface between the protrusions 9 such that it does not contact the layer to be cut. The other magnet element 27 is positioned towards the lateral sliding surface between the protrusions 9 such that it does not contact the guiding element.

In Fig. 16B a side view of the slide shoe according to Fig. 16A is shown. The protrusions 9 on the bottom sliding surface as well as one protrusion 9 on the lateral sliding surface can be seen as well as the opening 8 for receiving a blade.

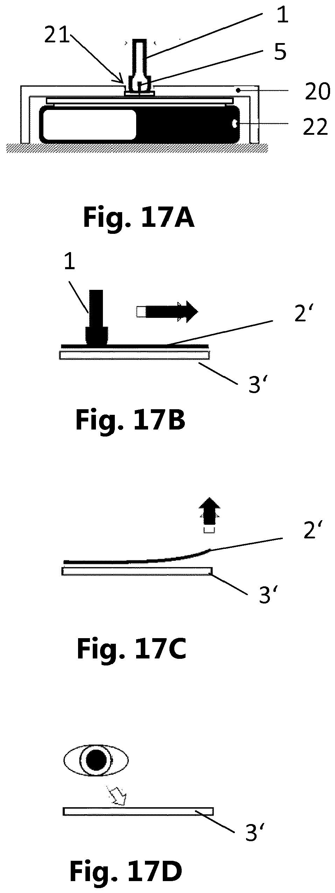

Finally, Referring to Fig. 17A-D of the drawings, a schematic illustration of steps of a method for calibrating or adjusting a pre-load of a spring element 6 in an apparatus 1 for scoring is shown.

Calibrating or adjusting a pre-load of the spring element 6 of the apparatus 1 is advantageous in order to apply a scoring force F calibrated to at least partially penetrate the layer 2 and remain the substrate 3 unscratched.

Figure 17A schematically shows the apparatus 1 placed on a jig 20. The jig 20 is provided with an opening 21 for the blade 5. A scale 22, preferably a digital scale, is arranged at the opening 21, preferably directly underneath the opening 21, such that the blade 5 extending through the opening 21 contacts the weight sensitive platform of the scale 22.

Basic principle of the calibration is to use the scale 22 for quantitative pre-load adjustment of the spring element 6. Therefore, the apparatus 1 is placed on the jig such that the blade 5 reaches through the opening 21 and touches the scale.

For example, the calibration may be conducted without the slide shoe 7 and the distance provided by the jig 20 between the structural body 4 of the apparatus and the scale 22 may be similar to the thickness of the slide shoe 7. Thus, the scale displays the scoring force applied to a layer when the apparatus 1 is slid on a layer 2 with the slide shoe. E.g. the scale displays a weight corresponding to the scoring force (the force in Newton may be calculated by the displayed weight multiplied by the gravitational acceleration) or the scale might have a force measuring mode directly displaying the scoring force in Newton.

In this way, the scoring force F can be adjusted precisely by changing the pre-load of the spring element 6 and an adjusted scoring force F, the blade is loaded with by the spring element 6, can be measured at the same time. Accordingly, a desired scoring force F can be adjusted in a convenient manner.

Fig. 17B to 17D illustrate steps for testing the suitability of the scoring force F for a certain type of layer. These testing steps may be part of a calibration, in particular if the calibration is conducted for the first time.

For the testing, a sample part of the layer, in the following named sample layer 2', and a sample substrate 3' are used.

A first step of the testing is the adhesive application of the sample layer 2' onto the sample substrate 3'. For example an adhesive color film is positioned on the sample substrate 3'.

Fig. 17B shows scoring of the sample layer 2' placed on the sample substrate 3' to generate a sample score mark. Accordingly, the apparatus 1 is slid on the sample layer 2' along the direction indicated by an arrow and a scoring mark is generated in the same direction.

Fig. 17C illustrates removing the sample layer 2' from the sample substrate 3'. The sample layer 2' is removed at least in the area of the sample score mark in order to assure a sufficient scoring and inspect the sample substrate 3' underneath.

Fig. 17D illustrates inspecting the sample substrate 3' for scratches.

The inspection is in particular a visual inspection, as illustrated in Fig. 17B. In this case, a transparent sample substrate 3' is advantageous. For example, the inspection can be conducted as a visual against backlights inspection.

However, other kinds of sample substrates 3' and/or other inspection methods are possible. For example in case of a painted metallic sample substrate 3', alternatively or in addition to a visual inspection, the sample substrate may be exposed to a salt spray test according to ISO 9227. In this way, it can be ensured that the scoring did not cause any harm to the sample substrate 3' if no corrosion can be identified after a predetermined period of time. For example, a preliminary result can be derived from the sample substrate 3' after three days.

In case of a harmed substrate, the scoring force is too high. In this case, the pre-load of the spring may be readjusted, here reduced, and tested again. And in case of an insufficient scoring, the scoring force is too low. In this case, the pre-load of the spring may be re-adjusted, here increased, and tested again.

By means of the scale 22, the adjustment is numerically defined and thus advantageously reproducible. Accordingly, once a suitable scoring force for a certain type of layer has been found out, the calibration can be reproduced in the future without the testing steps or with less testing steps.

Although specific embodiments of the invention are illustrated and described herein, it will be appreciated by those of ordinary skill in the art that a variety of alternate and/or equivalent implementations exist. It should be appreciated that the exemplary embodiment or exemplary embodiments are examples only and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

It will also be appreciated that in this document the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

### LIST OF REFERENCE SIGNS

- 1: apparatus
- 2: layer
- 3: substrate
- 4: structural body
- 5: blade
- 6: spring element
- 7: slide shoe
- 8: opening
- 9: protrusion
- 10: pre-loading element
- 11: bottom sliding surface
- 12: guiding element
- 13: lateral sliding surface
- 14: ball element
- 15: piston element
- 16: adhesive layer
- 17: holder
- 18: rotational axis
- 19: surface
- 20: jig
- 21: opening
- 22: scale
- 23: width
- 24: difference
- 25: flange
- 26: pivot

- F: scoring force

## Claims

1. An apparatus (1) for scoring a layer (2) of an adhesive film, foil, or sheet, adhesively placed on a substrate (3), the apparatus (1) comprising:
a structural body (4);
a blade (5) movably received in the structural body (4);
a spring element (6) configured for loading the blade (5) with a predetermined scoring force (F);
a slide shoe (7) arranged at a distal end of the structural body (4),
wherein the slide shoe (7) comprises an opening (8) for the blade to extend there through for scoring the layer (2) while sliding the apparatus (1) over the layer (2), and
wherein the slide shoe (7) at least at one side comprises a plurality of protrusions (9) for establishing a defined sliding contact.

2. An apparatus (1) according to claim 1, wherein the blade (5) is configured as to provide a round or rounded blade tip.

3. An apparatus (1) according to claim 1 or 2, wherein the slide shoe (7) comprises means for movably attaching the apparatus to the substrate.

4. An apparatus (1) according to any one of claims 1 to 3, further comprising a pre-loading element (10) configured to pre-load the spring (6) in order to adjust the scoring force.

5. An apparatus (1) according to claim 4, wherein the pre-loading element (10) is configured adjustable, in particular continuously adjustable, preferably by means of a thread, for calibrating the scoring force.

6. An apparatus (1) according to any one of claims 1 to 5, wherein the protrusions (9) are configured for establishing a defined sliding contact to the layer (2) and/or substrate (3).

7. An apparatus (1) according to claim 6, wherein at least three protrusions (9) are arranged on a bottom sliding surface (11) of the slide shoe (7).

8. An apparatus (1) according to any one of claims 1 to 7, wherein the protrusions (9) are configured for establishing a defined sliding contact to a guiding element (12), in particular to a lateral guidance.

9. An apparatus (1) according to claim 8, wherein at least two protrusions (9) are arranged on a lateral sliding surface (13) of the slide shoe.

10. An apparatus (1) according to any one of claims 1 to 9, wherein the blade (5) is configured as a swivel blade for automatically adapting its orientation to any sliding direction.

11. An apparatus (1) according to claim 10, further comprising a ball element (14) or ball section and a piston element (15), both arranged between the spring element (6) and the blade (5) to provide a point contact transferring the scoring force (F), in particular with low friction.

12. A method of separating a layer, in particular an adhesive film, foil, or sheet, adhesively placed on a substrate, the method comprising the steps of:
scoring the layer (2) by sliding an apparatus(1) according to any one of claims 1 to 11 over it to generate a score mark along a desired separation line; and
removing the layer on one side of the score mark.

13. A method according to claim 12, further comprising a step of calibrating a pre-load of the spring element (6) of the apparatus (1) to apply a scoring force (F) calibrated to at least partially score the layer (2) and remain the substrate (3) unscratched.

14. A method according to claim 13, wherein the step of calibrating a pre-load of the spring element (6) comprises:
placing the apparatus on a jig (20) provided with an opening for the blade (5);
measuring a scoring force (F), in particular with a scale (22) arranged directly at the opening (21); and
adjusting the pre-loading element (10) to generate a pre-load of the spring (6) corresponding to a desired scoring force (F).

15. A method according to claim 14, wherein the step of calibrating a pre-load of the spring element (6) further comprises the steps of:
applying a sample layer (2') onto a sample substrate (3');
scoring the sample layer (2') on the sample substrate (3') to generate a sample score mark;
removing the sample layer (2') from the sample substrate (3'), at least in the area of a representative sample scooring; and
inspecting the sample substrate (3') for marks and/or scratches.
